# EUROPEAN PATENT SPECIFICATION

(11) **EP 3 410 575 B1**
(45) Date of publication and mention of the grant of the patent: **23.06.2021**
(21) Application number: 17173257.1
(22) Date of filing: 29.05.2017
(51) Int. Cl.: H02K 3/16, H02K 7/09, H02K 11/20, H02K 5/24, H02K 7/08, H02K 11/30

(54) **AN ELECTRICAL MACHINE**
ELEKTRISCHE MASCHINE
MACHINE ÉLECTRIQUE

(43) Date of publication of application: 05.12.2018
(73) Proprietor: ABB Schweiz AG, 5400 Baden (CH)
(72) Inventor: LIU, Bin, 723 56 Västerås (SE); RAMTEEN, Marcus, 18257 Danderyd (SE); HOLOPAINEN, Timo, 02110 Espoo (SE)
(74) Representative: Kransell & Wennborg KB

(56) References cited:
- WO-A1-2011/011868
- CN-A- 101 546 948
- US-A- 4 806 835

## Description

### TECHNICAL FIELD

The present invention relates to an electrical machine comprising: a rotor, a stator comprising at least one mechanical bearing via which the rotor is supported by the stator, a vibration damper arrangement comprising a winding provided on the stator and configured to suppress stator vibration, a vibration sensor configured to sense machine vibrations, and a controller which is operatively connected to the vibration damper arrangement and to the vibration sensor and which is configured to control the operation of the vibration damper arrangement on basis of information received from the vibration sensor.

In this context the term "mechanical bearing" is referred to as a bearing which forms part of the stator and is during operation of the electrical machine in mechanical contact with the rotor. In the following, the term "antifriction bearing" may be used as a synonym to the term "mechanical bearing". Magnetic bearings are not included in this group of bearings.

Stator vibration is caused by rotor vibration transferred to the stator through the at least one mechanical bearing.

### BACKGROUND ART

Critical speed of electrical machines is defined as a resonance excited by the unbalance force at rotational speed. In electrical machine design, the critical speeds are limiting factors, which affect the design process in a restrictive manner. For example, the lowest critical speed limits the maximum speed of motors with antifriction bearings. A long-term operation close to critical speeds is usually not possible due to an excessive vibration level which may break the machine or lead to failure due to fatigue.

Variable-speed drives (VSD) are needed in many applications because VSD can adjust motor speed to optimize system performance, e.g. efficiency. VSD usually has wide speed range. Rotor vibration can be a problem to VSD because the optimal running speed cannot be reached due to increased vibration. Operation on the critical speeds opens attractive possibilities in VSD operation.

In rotating machinery, both passive and active vibration suppression are commonly used to prevent excessive vibration. The working principle of passive methods is to absorb the kinetic vibration energy from the system without bringing any external energy into the system. In large motor applications, passive vibration damping could be achieved, e.g. by short-circuiting extra windings. However, there are some limitations regarding passive damping solutions. First, it will decrease machine efficiency without selection of damping frequency. Second, damping effect could not be optimized since the phase cannot be adjusted.

In active vibration control, an additional force is generated through an actuator realizing a control signal that effectively negates the vibration forces. Active damping solution has recently drawn more attention from industrial interests. Additional control winding could control the magnetic flux and magnetic forces to damp out rotor lateral vibration. There are many advantages with this approach. Lower vibration over speed range could be achieved and motor adaptability on different foundations could be improved. It will protect the bearings and increases bearing life span. Higher speed and power could also be achieved from the same frame size if continuous operation at critical speed is possible.

One active vibration damper arrangement is disclosed by CN101546948 A.

For the purpose of controlling active damping arrangements on electrical machines on which the rotor is supported by the stator via mechanical bearings, prior art suggests the use of displacement sensors such as eddy current sensors or inductions sensors to sense the radial vibrations of the rotor. However, industrial displacement sensors are usually quite expensive. Accordingly, the provision of displacement sensors such as eddy current sensors or induction sensors will be a large extra cost for the active damping solution. Because these sensors measure the relative displacement between the rotor and stator, it is also difficult to mount displacement sensors on electrical machines equipped with antifriction bearings to capture rotor resonance vibration.

There thereby remains a desire to develop an electrical machine with an alternative and/or improved vibration damper arrangement.

### SUMMARY OF THE INVENTION

An object of the present invention is to present an alternative solution to vibration sensor solutions suggested by prior art provided on electrical machines comprising a rotor carried by a stator via mechanical bearings.

The object of the invention is achieved by means of an electrical machine as claimed by independent claim 1. Embodiments of the invention are defined by the dependent claims.

Accelerometers are easier to mount and are considerably cheaper than contemporary displacement sensors, such as eddy current sensors and induction sensors. Thereby, a considerable cost reduction is achieved. The positioning of the accelerometer on the stator, instead of on the rotor, makes the connection between the accelerometer and the controller easier to establish and more reliable. The at least one mechanical bearing is a roller bearing. According to the invention, at least one accelerometer overlaps said mechanical bearing in an axial direction of the electrical machine. Apart from the mechanical bearing, the stator may comprise stator housing and any other element that may form part of a stator of an electrical machine and to which vibrations generated by the rotor are transmitted such that they can be detected by an accelerometer arranged on said housing or element. Vibrations are referred to as radial vibrations, in radial directions relative a rotational axis of the rotor. Preferably, the electrical machine may be provided with so called variable-speed drive (VSD), wherein the VSD can adjust motor speed to optimize system performance.

The following embodiments all refer to the embodiments of the invention. According to one embodiment, the distance of said at least one accelerometer (7, 8; 9, 10) from said mechanical bearing (3, 4) is at most 100 mm, such as at most 50 mm, at most 20 mm, or at most 10 mm.

According to one embodiment said at least one accelerometer is arranged on said mechanical bearing. By arranging the at least one accelerometer on the mechanical bearing, a very clear sensor signal can be obtained, compared to if the accelerometer is positioned on a more remote place on the stator where the vibrations from the rotor are less clear.

According to one embodiment said at least one accelerometer is arranged on an outer surface of said mechanical bearing. Arranging the at least one accelerometer on an outer surface of the mechanical bearing contributes to a facilitated mounting operation, and also makes the connection of the accelerometer to the controller less complicated. In case of need, it will also be easier to exchange the accelerometer compared to if the latter would be arranged inside the mechanical bearing.

According to one embodiment the electrical machine comprises at least two accelerometers. By providing more than one accelerometer, a more reliable and exact detection of vibrations transmitted from the rotor to the stator can be achieved. A more redundant control arrangement is also achieved and the functionality thereof can be maintained also upon failure of one of the accelerometers.

According to one embodiment said at least two accelerometers are arranged at different angular positions in relation to the rotational axis of the rotor and as seen in a longitudinal direction of the rotor. In other words, the accelerometers are arranged at a distance from the rotational axis, and angularly separated from each other. The distance from the rotational axis to the respective accelerometer could be different. Because of the angular set off, the accelerometers will be better suited to detect vibrations in different angular directions relative to the rotational axis of the rotor.

According to one embodiment the angular set off between said at least two accelerometers is at least 45°. The more accelerometers that are provided, the smaller angular set off between individual accelerometers can be applied, and the better coverage of the vibration detection can be achieved.

According to one embodiment said stator comprises two mechanical bearings via which the rotor is supported by the stator.

According to one embodiment the vibration sensor comprises at least one accelerometer on each of said two mechanical bearings.

According to one embodiment the vibration sensor comprises two accelerometers on each of said two mechanical bearings.

According to one embodiment the at least one accelerometer arranged on a first of said two mechanical bearings is in angular alignment with the at least one accelerometer arranged on a second of said two mechanical bearings, with regard to the rotational axis of the rotor and as seen in a longitudinal direction of the rotor. Thereby, the accelerometers of the different bearings will supplement each other by measuring vibrations in the same angular directions, and thereby contribute to more accurate vibration detection than if the accelerometers would not be in alignment with each other.

According to one embodiment the mechanical frame size of the machine is above 300 mm. The mechanical frame size may be referred to as the distance from the rotor to the level of a ground that the stator is standing on.

Further features and advantages of the present invention will be presented in the following detailed description of embodiments.

### BRIEF DESCRIPTION OF THE DRAWINGS

The invention will be explained in greater detail with reference to the accompanying drawings, wherein,
Fig. 1 is partly cut view of a schematically shown electrical machine according to the invention,
Fig. 2 is a cross section according to II-II in fig. 1 of the electrical machine, as seen in the direction of the rotational axis of the rotor, on which stator there are provided two accelerometers with an angular set off in relation to each other,
Fig. 3 is a schematic cross section of a stator slot provided with stator winding and with additional control winding of an active damping arrangement, and
Fig. 4 is a principal representation of how the additional control winding of an active damping arrangement will interfere with the main winding which is used for producing torque.

### DETAILED DESCRIPTION

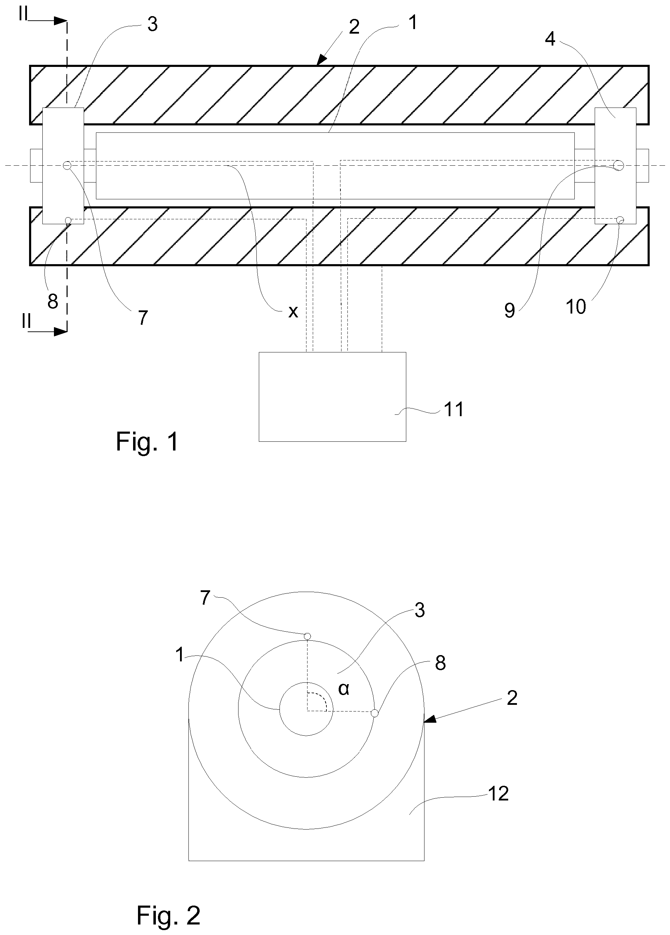

Fig. 1 shows an embodiment of an electrical machine according to the present invention. Typically, the electrical machine is provided with so called variable-speed drive (VSD), wherein the VSD can adjust motor speed to optimize system performance.

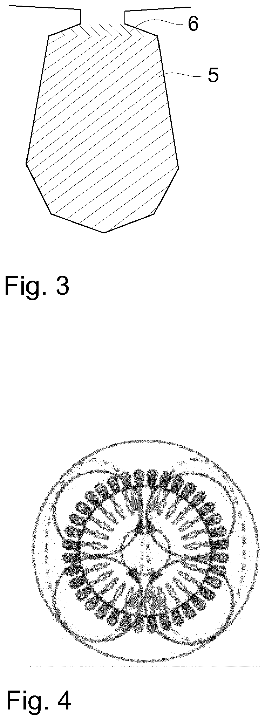

The electrical machine comprises a rotor 1, and a stator 2 comprising two mechanical bearings 3, 4 via which the rotor 1 is supported by the stator 2. In fig. 1 a main part of the stator 2 is shown in cross section, while the rotor 1 and the bearings 3, 4 (which are defined as belonging to the stator 2) are shown from above (not in cross section). The electrical machine further comprises a vibration damper arrangement that, apart from the main stator winding, comprises an additional winding provided on the stator 2 and configured to suppress stator vibration. In fig. 3, one stator slot filled with main stator winding 5 and additional winding 6 has been schematically indicated. It should be understood that the arrangement of the main stator winding 5 and the additional winding 6 will be a matter of stator design and that the specific design chosen could differ between different types of electrical machines.

The electrical machine also comprises vibration sensors 7-10 configured to sense machine vibration, and a controller 11 which is operatively connected to the vibration damper arrangement and to the vibration sensors 7-10 and which is configured to control the operation of the vibration damper arrangement on basis of information received from the vibration sensors 7-10, as schematically indicated in fig. 1. The vibration sensors 7-10 comprise accelerometers that are arranged on the stator 2, more precisely on an outer surface of the respective mechanical bearing 3, 4. In the drawing, parts of the stator body overlap the bearings 3, 4 where the accelerometers 7-10 are positioned. This need not be the case, but the stator body could instead be designed so as to make the accelerometers more readily accessible from outside the stator. Moreover the positioning of the accelerometers 7-10 is only schematically shown.

The mechanical bearings 3, 4 are roller bearings. As can be seen in fig. 1 and fig. 2, the mechanical bearings 3, 4 form part of the stator 2. Each bearing is directly connected to and supported by a support structure 12 (see fig. 2) which also forms part of the stator 2 and which is configured to stand on the ground.

The additional winding 6, also referred to as additional control winding, only takes small space in stator slots (∼5% if levitation is not required) as can be seen in fig. 3. The additional control winding 6 will interfere with the main winding 5 which is used for producing torque to generate lateral (radial) forces, as shown in Fig. 4. The principle of active damping by means of additional wiring on the stator is not disclosed in detail in this patent application. It should be understood that a vibration damping arrangement which applies this damping principle is preferred, but that the invention is applicable also to other active damping arrangements which can be controlled on basis of vibration information from accelerometers located on the stator 2.

The controller 11 is a control unit comprising software configured to control the delivery of electrical current through the additional winding 6 on basis of information regarding vibration of the rotor 1 received from the accelerometers 7-10. A synchronous component of acceleration signal could be retrieved by e.g. adaptive notch filter approach from raw acceleration signal from the accelerometers. Additional phase shift could be added to the synchronous acceleration component to get optimal damping for lateral (radial) rotor vibration. Similar approach could be done for harmonics vibration suppression. The controller 11 preferably comprises software configured for execution of such signal treatment for the purpose of controlling the operation of the additional winding 6.

There are provided two accelerometers 7, 8; 9, 10 on each respective mechanical bearing 3, 4. On each bearing 3, 4 the accelerometers are arranged at different angular positions in relation to the rotational axis x of the rotor 1, as seen in a longitudinal direction of the rotor 1. In the preferred embodiment shown, the angle α between the accelerometers 7, 8 of the first bearing 3 is approximately 90° (as can be seen in fig. 2). The angle between the accelerometers 9, 10 of the second bearing 4 is also approximately 90°. The accelerometers 7, 8; 9, 10 of the different mechanical bearings 3, 4 are in angular alignment with each other with regard to the rotational axis x of the rotor 1 (as can be seen in fig. 1). One accelerometer 7, 9 on each bearing 3, 4 is positioned so as to primarily sense vibrations in a vertical direction, while one accelerometer 8, 10 on each bearing 3, 4 is positioned so as to primarily sense vibrations in a horizontal direction when the electrical machine is standing in an operation position such as the one shown in fig. 2.

## Claims

1. An electrical machine comprising:
- a rotor (1),
- a stator (2) comprising at least one mechanical bearing (3, 4) via which the rotor (1) is supported by the stator (2), wherein the at least one mechanical bearing is a roller bearing, and
- a vibration damper arrangement comprising a winding (6) provided on the stator (2) and configured to suppress stator vibration,
**characterised by**
- a vibration sensor configured to sense machine vibration, the vibration sensor comprising at least one accelerometer (7, 8, 9, 10) which is arranged on the stator (2) and which overlaps said mechanical bearing (3, 4) in an axial direction of the electrical machine, and
- a controller (11) which is operatively connected to the vibration damper arrangement and to the vibration sensor, and which is configured to control the operation of the vibration damper arrangement on basis of information received from the vibration sensor.

2. An electrical machine according to claim 1, **characterised in that** the distance of said at least one accelerometer (7, 8; 9, 10) from said mechanical bearing (3, 4) is at most 100 mm, such as at most 50 mm, at most 20 mm, or at most 10 mm.

3. An electrical machine according to claim 1 or 2, **characterised in that** said at least one accelerometer (7, 8; 9, 10) is arranged on said mechanical bearing (3, 4).

4. An electrical machine according to claim 3, **characterised in that** said at least one accelerometer (7, 8; 9, 10) is arranged on an outer surface of said mechanical bearing (3, 4).

5. An electrical machine according to any one of claims 1-4, **characterised in that** it comprises at least two accelerometers (7, 8; 9, 10).

6. An electrical machine according to claim 5, **characterised in that** said at least two accelerometers (7, 8; 9, 10) are arranged at different angular positions in relation to the rotational axis of the rotor (1) and as seen in a longitudinal direction of the rotor (1).

7. An electrical machine according to claim 8, **characterised in that** the angular offset between said at least two accelerometers (7, 8; 9, 10) is at least 45°.

8. An electrical machine according to any one of claims 1-7, **characterised in that** said stator (2) comprises two mechanical bearings (3, 4) via which the rotor (1) is supported by the stator (2).

9. An electrical machine according claim 8, **characterised in that** the vibration sensor comprises at least one accelerometer (7, 8; 9, 10) on each of said two mechanical bearings (3, 4).

10. An electrical machine according to claim 9, **characterised in that** the vibration sensor comprises two accelerometers (7, 8; 9, 10) on each of said two mechanical bearings (3, 4).

11. An electrical machine according to claim 9 or 10, **characterised in that** the at least one accelerometer (7, 8) arranged on a first of said two mechanical bearings (3, 4) is in angular alignment with the at least one accelerometer (9, 10) arranged on a second of said two mechanical bearings (3, 4), with regard to the rotational axis x of the rotor (1) and as seen in a longitudinal direction of the rotor (1).

12. An electrical machine according to any one of claims 1-11, **characterised in that** the mechanical frame size of the machine is above 300 mm.

## Patentansprüche

1. Elektrische Maschine, die Folgendes umfasst:
- einen Rotor (1),
- einen Stator (2), der mindestens ein mechanisches Lager (3, 4) umfasst, über das der Rotor (1) durch den Stator (2) getragen wird, wobei das mindestens eine mechanische Lager ein Wälzlager ist, und
- eine Schwingungsdämpferanordnung, die eine Wicklung (6) umfasst, die auf dem Stator (2) vorgesehen ist und konfiguriert ist, die Statorschwingungen zu unterdrücken,
**gekennzeichnet durch**
- einen Schwingungssensor, der konfiguriert ist, die Maschinenschwingungen zu erfassen, wobei der Schwingungssensor mindestens einen Beschleunigungsmesser (7, 8, 9, 10) umfasst, der auf dem Stator (2) angeordnet ist, und der das mechanische Lager (3, 4) in einer axialen Richtung der elektrischen Maschine überdeckt, und
- eine Steuereinheit (11), die mit der Schwingungsdämpferanordnung und mit dem Schwingungssensor betriebstechnisch verbunden ist und die konfiguriert ist, den Betrieb der Schwingungsdämpferanordnung auf der Grundlage von Informationen, die von dem Schwingungssensor empfangen worden sind, zu steuern.

2. Elektrische Maschine nach Anspruch 1, **dadurch gekennzeichnet, dass** der Abstand des mindestens einen Beschleunigungsmessers (7, 8; 9, 10) von dem mechanischen Lager (3, 4) höchstens 100 mm, z. B. höchstens 50 mm, höchstens 20 mm oder höchstens 10 mm ist.

3. Elektrische Maschine nach Anspruch 1 oder 2, **dadurch gekennzeichnet, dass** der mindestens eine Beschleunigungsmesser (7, 8; 9, 10) an dem mechanischen Lager (3, 4) angeordnet ist.

4. Elektrische Maschine nach Anspruch 3, **dadurch gekennzeichnet, dass** der mindestens eine Beschleunigungsmesser (7, 8; 9, 10) auf einer Außenfläche des mechanischen Lagers (3, 4) angeordnet ist.

5. Elektrische Maschine nach einem der Ansprüche 14, **dadurch gekennzeichnet, dass** sie mindestens zwei Beschleunigungsmesser (7, 8; 9, 10) umfasst.

6. Elektrische Maschine nach Anspruch 5, **dadurch gekennzeichnet, dass** die mindestens zwei Beschleunigungsmesser (7, 8; 9, 10) an unterschiedlichen Winkelpositionen bezüglich der Drehachse des Rotors (1) und in Längsrichtung des Rotors (1) gesehen angeordnet sind.

7. Elektrische Maschine nach Anspruch 6, **dadurch gekennzeichnet, dass** der Winkelversatz zwischen den mindestens zwei Beschleunigungsmessern (7, 8; 9, 10) mindestens 45° beträgt.

8. Elektrische Maschine nach einem der Ansprüche 17, **dadurch gekennzeichnet, dass** der Stator (2) zwei mechanische Lager (3, 4) umfasst, über die der Rotor (1) durch den Stator (2) getragen wird.

9. Elektrische Maschine nach Anspruch 8, **dadurch gekennzeichnet, dass** der Schwingungssensor mindestens einen Beschleunigungsmesser (7, 8; 9, 10) auf jedem der zwei mechanischen Lager (3, 4) umfasst.

10. Elektrische Maschine nach Anspruch 9, **dadurch gekennzeichnet, dass** der Schwingungssensor zwei Beschleunigungsmesser (7, 8; 9, 10) auf jedem der zwei mechanischen Lager (3, 4) umfasst.

11. Elektrische Maschine nach Anspruch 9 oder 10, **dadurch gekennzeichnet, dass** der mindestens eine Beschleunigungsmesser (7, 8), der auf einem ersten der zwei mechanischen Lager (3, 4) angeordnet ist, sich bezüglich der Drehachse x des Rotors (1) und in einer Längsrichtung des Rotors (1) gesehen in Winkelausrichtung mit dem mindestens einen Beschleunigungsmesser (9, 10) befindet, der auf einem zweiten der zwei mechanischen Lager (3, 4) angeordnet ist.

12. Elektrische Maschine nach einem der Ansprüche 111, **dadurch gekennzeichnet, dass** die mechanische Rahmengröße der Maschine über 300 mm ist.

## Revendications

1. Machine électrique comprenant :
- un rotor (1),
- un stator (2) comportant au moins un palier mécanique (3, 4) au moyen duquel le rotor (1) est supporté par le stator (2), cet au moins un palier mécanique étant un roulement à rouleaux, et
- un dispositif amortisseur de vibrations comprenant un enroulement (6) prévu sur le stator (2) et configuré de façon à supprimer les vibrations du stator,
**caractérisé par**
- un capteur de vibrations configuré de façon à détecter les vibrations de la machine, ce capteur de vibrations comprenant au moins un accéléromètre (7, 8, 9, 10) qui est disposé sur le stator (2) et qui chevauche ledit palier mécanique (3, 4) dans une direction axiale de la machine électrique, et
- un dispositif de commande (11) qui est relié de manière fonctionnelle au dispositif amortisseur de vibrations et au capteur de vibrations, et qui est configuré de façon à commander le fonctionnement du dispositif amortisseur de vibrations en se basant sur des informations reçues du capteur de vibrations.

2. Machine électrique selon la revendication 1, **caractérisée en ce que** la distance séparant ledit au moins un accéléromètre (7, 8 ; 9, 10) et ledit palier mécanique (3, 4) est au plus 100 mm, telle qu'au plus 50 mm, au plus 20 mm, ou au plus 10 mm.

3. Machine électrique selon la revendication 1 ou 2, **caractérisée en ce que** ledit au moins un accéléromètre (7, 8 ; 9, 10) est disposé sur ledit palier mécanique (3, 4).

4. Machine électrique selon la revendication 3, **caractérisée en ce que** ledit au moins un accéléromètre (7, 8 ; 9, 10) est disposé sur une surface extérieure dudit palier mécanique (3, 4).

5. Machine électrique selon l'une quelconque des revendications 1 à 4, **caractérisée en ce qu'**elle comporte au moins deux accéléromètres (7, 8 ; 9, 10).

6. Machine électrique selon la revendication 5, **caractérisée en ce que** lesdits au moins deux accéléromètres (7, 8 ; 9, 10) sont disposés dans différentes positions angulaires par rapport à l'axe de rotation du rotor (1) tels qu'on les voit dans une direction longitudinale du rotor (1).

7. Machine électrique selon la revendication 8, **caractérisée en ce que** le décalage angulaire entre lesdits au moins deux accéléromètres (7, 8 ; 9, 10) est au moins 45°.

8. Machine électrique selon l'une quelconque des revendications 1 à 7, **caractérisée en ce que** ledit stator (2) comporte deux paliers mécaniques (3, 4) au moyen desquels le rotor (1) est supporté par le stator (2) .

9. Machine électrique selon la revendication 8, **caractérisée en ce que** le capteur de vibrations comporte au moins un accéléromètre (7, 8 ; 9, 10) sur chacun desdits deux paliers mécaniques (3, 4).

10. Machine électrique selon la revendication 9, **caractérisée en ce que** le capteur de vibrations comporte deux accéléromètres (7, 8 ; 9, 10) sur chacun desdits deux paliers mécaniques (3, 4).

11. Machine électrique selon la revendication 9 ou 10, **caractérisée en ce que** l'au moins un accéléromètre (7, 8) disposé sur un premier desdits deux paliers mécaniques (3, 4) est en alignement angulaire avec l'au moins un accéléromètre (9, 10) disposé sur un deuxième desdits deux paliers mécaniques (3, 4), relativement à l'axe de rotation x du rotor (1) et tels qu'on les voit dans une direction longitudinale du rotor (1).

12. Machine électrique selon l'une quelconque des revendications 1 à 11, **caractérisée en ce que** la taille du bâti mécanique de la machine est au-dessus de 300 mm.
